# EUROPEAN PATENT APPLICATION

(11) **EP 3 413 593 A1**
(43) Date of publication of application: **12.12.2018**
(21) Application number: 17305668.0
(22) Date of filing: 07.06.2017
(51) Int. Cl.: H04W 4/00, H04W 12/04

(54) **A METHOD FOR PERSONALIZING A SECURE ELEMENT, CORRESPONDING APPLICATION AND SECURE ELEMENT**

(71) Applicant: GEMALTO SA, 92190 Meudon (FR)
(72) Inventor: EL MAROUANI, Abdellah, 13881 GEMENOS cedex (FR); LE SAUX, Nicolas, 13881 GEMENOS cedex (FR); RADE, Daniel, 13881 GEMENOS cedex (FR)

(57) **Abstract**

The invention concerns a secure element comprising:
- pre-issuance data installed in said secure element in a first physical personalization site;
- an application triggered at each reset of said secure element before all data allowing said secure element to be operational are installed in said secure element, said application constituting a firewall for the installation on said secure element of post-issuance data through a secure channel in a second physical personalization site.

## Description

The present invention concerns the personalization of secure elements destined to cooperate with devices like mobile terminals for telecommunications for example. These secure elements can be UICC secure elements (Universal Integrated Circuit Secure element), embedded UICCs (eUICCs), integrated UICCs (iUICCs) for example or embedded secure elements acting as strongboxes (eSE). A secure element can also be integrated in an loT device.

In the next description, a UICC secure element will be considered as a secure element. A UICC is a secure element that can be inserted in a mobile terminal, like a mobile phone, a PDA or a smartphone for example for establishing a communication with a telecommunication service provider (MNO - Mobile Network Operator)). A UICC is typically manufactured and fully personalized in a factory of a UICC manufacturer (secure element issuer). Once personalized, the personalized UICC is sold to a MNO. The personalization consists in storing securely in the UICC files, programs and data. In the next description, files, programs, keys, data will generally be called data.

In some cases however, it is wished to not fully personalize a UICC: The secure element issuer delivers not fully personalized secure elements to a third party that finishes the personalization of the secure elements.

In this case, two personalization steps are required:
- pre-issuance data are installed in the UICC in a first physical personalization site. The UICC is not fully personalized. For example, there is no IMSI/Ki in the UICC, the keys of the MNO can be absent as well as the diversified file system.
- this not fully personalized UICC is sent to a second physical personalization site (for example in another country) where post-issuance data are installed in the UICC by a third-party.

Once the post-issuance data are installed in the UICC, the UICC is fully personalized and can be delivered to a MNO.

So, in case of third-party personalization, a secure element issuer company will deliver not fully personalized UICCs. The final personalization phase will be done in customer office by a third-party company that might not have the same level of security than the issuer company production site (first physical personalization site). In that context, the first physical personalization site needs to deliver UICCs that:
- are resistant to any tentative of stealing and lost during the transportation to the second physical personalization site,
- are compatible with a personalization in a non-secure area (the second physical personalization site),
- are not usable on the field before the finalization of the personalization like defined by first physical personalization site.

Said otherwise, the first physical personalization site wants to be sure that the fully personalized UICC is personalized like it would be fully personalized in his own factory, with the same level of security as applied in his own factory, and that the UICCs sent to the second physical personalization site are not operable before they are fully personalized by the second physical personalization site.

For solving this problem, the present invention proposes a secure element comprising:
- pre-issuance data installed in the secure element in a first physical personalization site;
- an application triggered at each reset of the secure element before all data allowing the secure element to be operational are installed in the secure element, the application constituting a firewall for the installation on the secure element of post-issuance data through a secure channel in a second physical personalization site.

Preferably, the secure element comprises a unique identifier from which a session key is derived using a master key in the second physical personalization site, the session key allowing to establish the secure channel between the secure element and a personalization machine installed in the second physical personalization site.

The invention also concerns a method for personalizing a secure element in order that the secure element can be operational, the method comprising:
- installing in the secure element, in a first physical personalization site pre-issuance data and an application that is triggered at each reset of the secure element before all data allowing the secure element to be operational are installed in the secure element, the application constituting a firewall for the installation on the secure element of post-issuance data through a secure channel in a second physical personalization site.

Advantageously, the application is deleted from the secure element after all data allowing the secure element to be operational are installed in the secure element.

Preferably, the application cannot be deleted if the all data are not personalized.

The invention also concerns an application installed in a microprocessor with pre-issuance data of a secure element in a first physical personalization site, the application comprising instructions for executing the following tasks:
- Blocking access to the secure element unless a mutual authentication between the secure element and a personalization machine installed in a second personalization site is not achieved;
- Once the mutual authentication is achieved, acting as a firewall for filtering and dispatching post-issuance data transferred to the secure element in the second physical personalization site.

Preferably, the application deletes itself when all data allowing the secure element be operational are installed in the second physical personalization site.

The invention thus proposes a secure element, like a UICC for example, comprising:
The invention is thus based on a personalization application or applet (that can be called MPerso) that protects the first physical personalization site's company personalization mandatory steps and asks to the requirement of secure element resistance to non-expected manipulation done in third-party area (in the second physical personalization site).

The Mperso applet is installed in the first physical personalization site at the end of the pre-personalization of the secure element (with pre-issuance data) before shipment to the second physical personalization site.

At the installation of the Mperso application, the application makes the following steps:
- Takes the Global Platform default selected and final application privilege to be triggered at each secure element reset;
- Mandates for all commands sent to the secure element a minimum level of security that are Global Platform MAC (signature) and Global Platform ENC (encryption) for managing a secure exchange of data, programs and files between a personalization machine and the secure element in the second physical personalization site.
- Manages all commands including selection of others application through a dedicated STORE data command to ensure the verification and control of all commands sent to the secure element.
- Sets the secure element in LOCKED state at the end of the application Mperso installation.

The different states of the secure element are defined in Global Platform Secure element Specification V2.2 from March 2006, point 5.1.

During their transportation from the first physical personalization site to the second physical personalization site, all the secure elements are in LOCKED state and the only way to unlock a secure element it is to manage it through the Mperso application with diversified secure element's secrets. Then the secure element is resistant to any tentative of stealing or lost during transportation.

The Mperso application is triggered at each reset of the secure element before all data allowing the secure element to be operational are installed in the secure element in the second physical personalization site, the Mperso application constituting a firewall for the installation on the secure element by a personalization machine of post-issuance data through a secure channel in the second physical personalization site.

The first physical personalization site sends through a secure channel a library of commands (DLL - Dynamic Link Library) to the second personalization site in order that these commands can be stored in the secure elements by a personalization machine. When the secure element is in the second physical personalization site, after successful authentication to Mperso application, the secure element goes automatically to temporary transient Global Platform CARD SECURED state. All the commands by the personalization machine are sent through a secure channel to Mperso that dispatch the commands to the good applications after verification of the commands and the authorizations. If any error or reset occurs, the secure element goes automatically to Global Platform CARD LOCKED state.

When all steps of personalization are finished in the second physical personalization site, the MPerso can be deleted otherwise the secure element stays in CARD LOCKED state. This deletion enables the secure element to be compliant with EMVCO.

At the deletion of the Mperso application, the application makes the following steps:
- Verification if all mandatory steps are done, otherwise error and CARD LOCKED state until the end of the personalization;
- Set the Global Platform final application and default selected privilege to the original application;
- Set the secure element in a usable consumer way by setting a persistent Global Platform CARD SECURED state.

Now, the personalization as required by secure element issuer company (first physical personalization site) is finished and the secure element is now usable by the customer (MNO in case of a UICC for example).

Preferably, the application Mperso cannot be deleted if all the data are not personalized. For the establishment of the secure channel between the personalization machine and the secure element, the secure element comprises a unique identifier from which a session key is derived using a master key in the second physical personalization site, the session key allowing to establish this secure channel between the secure element and the personalization machine installed in the second physical personalization site.

The invention also concerns a method for personalizing a secure element in order that the secure element can be operational, the method comprising:
- installing in the secure element, in a first physical personalization site pre-issuance data and an application that is triggered at each reset of the secure element before all data allowing the secure element to be operational are installed in the secure element, the application constituting a firewall for the installation on the secure element of post-issuance data through a secure channel in a second physical personalization site.

The invention also concerns an application installed in a microprocessor with pre-issuance data of a secure element in a first physical personalization site, the application comprising instructions for executing the following tasks:
- Blocking access to the secure element unless a mutual authentication between the secure element and a personalization machine installed in a second personalization site is not achieved;
- Once the mutual authentication is achieved, acting as a firewall for filtering and dispatching post-issuance data transferred to the secure element in the second physical personalization site.

## Claims

1. A secure element comprising:
- pre-issuance data installed in said secure element in a first physical personalization site;
- an application triggered at each reset of said secure element before all data allowing said secure element to be operational are installed in said secure element, said application constituting a firewall for the installation on said secure element of post-issuance data through a secure channel in a second physical personalization site.

2. A secure element according to claim 1, wherein it comprises a unique identifier from which a session key is derived using a master key in said second physical personalization site, said session key allowing to establish said secure channel between said secure element and a personalization machine installed in said second physical personalization site.

3. A method for personalizing a secure element in order that said secure element can be operational, said method comprising:
- installing in said secure element, in a first physical personalization site pre-issuance data and an application that is triggered at each reset of said secure element before all data allowing said secure element to be operational are installed in said secure element, said application constituting a firewall for the installation on said secure element of post-issuance data through a secure channel in a second physical personalization site.

4. A method according to claim 3, wherein said application is deleted from said secure element after all data allowing said secure element to be operational are installed in said secure element.

5. A method according to claim 3, wherein said application cannot be deleted if the all data are not personalized.

6. An application installed in a microprocessor with pre-issuance data of a secure element in a first physical personalization site, said application comprising instructions for executing the following tasks:
- Blocking access to said secure element unless a mutual authentication between said secure element and a personalization machine installed in a second personalization site is not achieved;
- Once said mutual authentication is achieved, acting as a firewall for filtering and dispatching post-issuance data transferred to said secure element in said second physical personalization site.

7. An application according to claim 6, wherein said application deletes itself when all data allowing said secure element be operational are installed in said second physical personalization site.
